# EUROPÄISCHE PATENTSCHRIFT

(11) **EP 0 489 421 B1**
(45) Veröffentlichungstag und Bekanntmachung des Hinweises auf die Patenterteilung: **04.09.1996**
(21) Anmeldenummer: 91120839.5
(22) Anmeldetag: 04.12.1991
(51) Int. Cl.: C09B 67/20, C09B 67/22, C08K 5/34, C09B 69/00, C09B 48/00

(54) **Pigmentzubereitungen**
Pigment preparations
Compositions pigmentaires

(30) Priorität: 06.12.1990 DE 4038885
(43) Veröffentlichungstag der Anmeldung: 10.06.1992
(73) Patentinhaber: HOECHST AKTIENGESELLSCHAFT, 65926 Frankfurt am Main (DE)
(72) Erfinder: Schwab, Wolfgang, Dr., W-6092 Kelsterbach (DE); Dietz, Erwin, Dr., W-6233 Kelkheim (Taunus) (DE)

(56) Entgegenhaltungen:
- EP-A- 0 014 458
- EP-A- 0 122 122
- EP-A- 0 224 445
- EP-A- 0 321 919
- EP-A- 0 362 690
- EP-A- 0 378 510
- DE-A- 1 444 730
- DE-A- 1 619 618
- DE-A- 1 644 624
- DE-A- 1 719 386
- FR-A- 1 353 759
- FR-A- 2 281 409
- GB-A- 2 071 683

## Beschreibung

Die vorliegende Erfindung betrifft neue Pigmentadditive und Pigmentzubereitungen, deren Pigmentanteil aus organischen Pigmenten und Pigmentadditiven besteht, sowie die Verwendung dieser Pigmentzubereitungen.

Bei der Dispergierung von Pigmenten in hochmolekularen Materialien kann eine Vielzahl von Problemen auftreten. Bei stark agglomerierenden und schwer dispergierbaren Pigmenten bleibt die Dispergierung unvollständig, und die optimale Feinheit und Farbstärke werden nicht erreicht. Unvollständig dispergierte Agglomerate sowie große Teilchen können bei der Weiterverarbeitung stören, insbesondere können sie in niedrigviskosen Systemen, beispielsweise in Lacken und Druckfarben, zu Sedimentationsproblemen führen. Desweiteren können Flockungen bei der Dispergierung, Lagerung oder Weiterverarbeitung zu unerwünschten rheologischen Veränderungen des Systems sowie zu Oberflächenstörungen, Farbstärke- und Glanzverlusten eines applizierten Films führen.

Es ist bekannt, daß das Flockungsverhalten von Pigmenten durch Additive, die basische Gruppen enthalten, in bestimmten Fällen günstig beeinflußt werden kann. Bei diesen Additiven handelt es sich im allgemeinen um basisch substituierte Derivate von Pigmenten.
In den DE-PS 12 60 433 und US-PS 3 920 469 sowie den US-PS 3 973 981, 4 310 359 und 4 664 714 ist beschrieben, daß basische Pigmentderivate der allgemeinen Formel 1 (siehe Formelblatt) einer Flockung der Pigmente entgegenwirken, wobei P einen Pigmentrest, X ein Brückenglied, beispielsweise -CO-oder -SO₂-, R¹, R² und R³ jeweils Wasserstoff oder eine Alkylgruppe, m eine ganze Zahl von 1 bis 6 und n einen Wert von 1 bis 4 darstellen.

Die Synthese dieser Verbindungen ist jedoch sehr aufwendig und mit einer hohen ökologischen Belastung verbunden, da die Einführung der Substituenten die Anwendung großer Mengen Schwefelsäure oder Chlorsulfonsäure erfordert.

Aus der US-PS 4 317 682 sind basische Pigmentadditive bekannt, die farblose Verbindungen der allgemeinen Formel 2 (siehe Formelblatt) darstellen, worin Q einen Rest einer aromatischen polycyclischen Verbindung bedeutet, A für eine chemische Bindung, -CONHC₆H₄- oder -SO₂NHC₆H₄- steht, R¹, R² und R³ die eingangs erwähnten Bedeutungen haben und m eine ganze Zahl von 1 bis 6 und n einen Wert von 1 bis 3 sind. Auch hier treten bei der Herstellung von Verbindungen dieses Typs erhebliche ökologische Probleme auf. Zudem verbessern diese Pigmentderivate das Flockungsverhalten zahlreicher Pigmente nur geringfügig. Nachteil dieser Pigmentderivate ist, daß sie lediglich in konventionellen, lösemittelhaltigen Bindemittelsystemen wirken, wohingegen sie in wäßrigen Lacksystemen eher eine Verschlechterung der anwendungstechnischen Eigenschaften bewirken.

Der vorliegenden Erfindung liegt die Aufgabe zugrunde, neue Pigmentzubereitungen von hoher Flockungsstabilität und guten rheologischen Eigenschaften zur Verfügung zu stellen, die sowohl für wäßrige als auch für organische Lösungsmittel enthaltende Bindemittelsysteme geeignet sind.

Diese Aufgabe wird gelöst durch Pigmentzubereitungen, deren Pigmentanteil im wesentlichen aus organischen Pigmenten aus der Klasse der Azopigmente, Anthrachinon-, Anthanthron-, Flavanthron-, Chinacridon-, Chinophthalon-, Dioxazin-, Isoindolin-, Isoindolinon-, Perinon-, Perylen- und/oder Thioindigopigmente und Pigmentadditiven der allgemeinen Formel I (siehe Formelblatt und Patentanspruch 1) besteht, in welcher P für den Rest eines organischen Pigments aus den oben genannten Klassen steht, m eine ganze Zahl von 3 bis 20 ist, n einen Wert von 0,1 bis 4 annehmen kann, und X in den Methylengruppen des Lactamrings Wasserstoff, C₁-C₄-Alkyl, Phenyl, Hydroxyl, NR¹R², wobei R¹ und R² unabhängig voneinander Wasserstoff oder C₁-C₄-Alkyl darstellen, oder COOM bedeutet, wobei M für Wasserstoff oder für die stöchiometrische Menge eines ein-, zwei- oder dreiwertigen Kations steht. C₁-C₄-Alkyl kann Methyl, Ethyl, n-Propyl, iso-Propyl, n-Butyl, sec.-Butyl, iso-Butyl oder tert.-Butyl sein.

Der optimale Wert für die Zahl n ist abhängig von der chemischen Konstitution, von Kristall- und Oberflächeneigenschaften des Pigments sowie den Eigenschaften des Anwendungsmediums und muß für jede Kombination Pigment/Anwendungsmedium im Einzelfall durch Experimente ermittelt werden. Das Pigmentadditiv stellt normalerweise ein Gemisch von Verbindungen der Formel I dar, in dem n Teile des Lactamrestes an durchschnittlich einen Teil des Pigmentrestes P gebunden sind. Aus diesem Grunde kann n auch gebrochene Zahlenwerte annehmen.

Bevorzugt werden Pigmentzubereitungen aus organischen Pigmenten und Pigmentadditiven der Formel (I), in welcher P den Rest eines polycyclischen Pigments aus der Klasse Anthrachinon, Anthanthron, Chinacridon, Chinophthalon, Dioxazin, Isoindolin, Isoindolinon, Perinon, Perylen und/oder Thioindigo darstellt, und hier vor allem solche, in denen X für Wasserstoff oder NR¹R² steht, wobei R¹ und R² unabhängig voneinander Wasserstoff oder C₁-C₄-Alkyl bedeuten, m vorzugsweise für eine ganze Zahl von 3 bis 6 steht und n vorzugsweise einen Wert von 1 bis 3 hat. Besonders bevorzugt sind davon solche Pigmentzubereitungen, in denen X Wasserstoff bedeutet, m für eine ganze Zahl von 3 bis 5 steht und n einen Wert von 1,5 bis 3 annimmt. Besonders bevorzugt sind auch solche Pigmentzubereitungen, deren Pigmentanteil aus Chinacridon- und Dioxazinpigmenten besteht.

Die erfindungsgemäßen Pigmentzubereitungen besitzen gegenüber den bekannten den Vorteil, daß sie nicht nur in lösemittelhaltigen Systemen, sondern auch in wäßrigen Bindemitteln eine hohe Flockungsstabilität besitzen, was sehr gute rheologische Eigenschaften bei der Verarbeitung sowie hervorragendes Glanzverhalten nach der Applikation zur Folge hat. Die erfindungsgemäßen Pigmentzubereitungen weisen ferner gute anwendungstechnische Eigenschaften in Pulverlacken auf.

Die der Erfindung zugrundeliegenden Pigmentadditive sind neu und ebenfalls Gegenstand der Erfindung.

Die erfindungsgemäßen Pigmentadditive der Formel (I) können nach üblichen Verfahren entweder aus N-Hydroxymethyllactamen der Formel (II) (siehe Formelblatt), die gemäß der US-PS 4 769 454 oder der US-PS 3 073 843 erhalten werden können, oder aus Lactamen der allgemeinen Formel (III) (siehe Formelblatt) in Gegenwart von Formaldehyd abgebenden Substanzen, beispielsweise Paraformaldehyd oder Trioxan, im sauren Reaktionsmedium, beispielsweise Schwefelsäure, Oleum oder Polyphosphorsäure, und den oben genannten Pigmenten hergestellt werden, wobei es vorteilhaft ist, eine Säure zu wählen, in der das jeweilige Pigment löslich ist. Bei der Verwendung von konzentrierter Schwefelsäure oder Oleum als Kondensationsmedium können in geringem Umfang Sulfonsäuregruppen in das Pigmentderivat eingebaut werden.

Die in den erfindungsgemäßen Pigmentzubereitungen enthaltenen Pigmente können als reine Pigmente, als Mischungen aus mindestens zwei Pigmenten oder als Mischkristalle aus mindestens zwei Pigmenten vorliegen.

Die Menge der Pigmentadditive der Formel (I), die den Pigmenten zur Herstellung der erfindungsgemäßen Zubereitungen zugesetzt wird, kann in weiten Grenzen schwanken. Es ist lediglich darauf zu achten, daß die angestrebte Pigmentqualität nicht beeinträchtigt wird. Die Pigmentzubereitungen können sowohl ein Pigment als auch Mischungen von Pigmenten mit jeweils einem oder mehreren Pigmentadditiven der Formel I sein. Die erforderliche Menge des erfindungsgemäßen Pigmentadditivs der Formel I ist abhängig von der Oberfläche des jeweiligen Pigments. Bevorzugte Pigmentzubereitungen bestehen aus
a) 99,5 bis 75, vorzugsweise 95 bis 85, Gewichtsteilen mindestens eines organischen Pigments,
b) 0,5 bis 25, vorzugsweise 5 bis 15, Gewichtsteilen mindestens eines Pigmentadditivs der Formel (I) und
c) 0 bis 10, vorzugsweise 0 bis 5, Gewichtsteilen an weiteren üblichen Zusatzstoffen, wie Tensiden, Harzen, rheologischen Additiven, Konservierungsmitteln und/oder Antistaubmitteln.

Die Herstellung der Pigmentzubereitungen kann auf verschiedene Weise erfolgen. So können beispielsweise die Pigmentadditive dem wasserfeuchten Pigmentpreßkuchen vor der Trocknung zugesetzt und eingearbeitet werden. Man kann auch Trockenmischungen von gemahlenen Pigmentadditiven mit dem Pigmentpulver herstellen. In vielen Fällen werden dabei jedoch keine optimalen Ergebnisse erzielt. Es hat sich bewährt, die Pigmentadditive schon während der Herstellung der Pigmente oder im Rahmen eines Feinverteilungsprozesses oder eines Lösemittelfinishs zuzusetzen. Die Zugabe der Pigmentadditive kann auch im Rahmen einer Naßmahlung eines Pigments in wäßrigem, wäßrig-organischem oder organischem Medium, beispielsweise auf einer Perlmühle, erfolgen. Bewährt hat sich auch die Zugabe der Pigmentadditive vor oder nach einem Druckfinish in wäßrigem, wäßrig-organischem oder organischem Medium. Die Isolierung der Mischungen aus diesem Medium erfolgt bevorzugt im neutralen oder alkalischen pH-Bereich.

Die erfindungsgemäßen Pigmentzubereitungen eignen sich besonders zum Pigmentieren von hochmolekularen organischen Materialien. Ein besonderer Vorteil ist, daß sie sowohl in lösemittelhaltigen als auch in wäßrigen Bindemitteln eine hohe Flockungsstabilität besitzen, hervorragende rheologische Eigenschaften und gleichzeitig eine gute Glanzentwicklung bewirken. Besonders sind die erfindungsgemäßen Pigmentzubereitungen zur Pigmentierung von Automobillacken geeignet.

Hochmolekulare organische Materialien, die mit diesen Zubereitungen pigmentiert werden können, sind beispielsweise Celluloseether und Celluloseester, insbesondere Ethylcellulose, Nitrocellulose, Celluloseacetat und Cellulosebutyrat, natürliche Harze oder Kunstharze, beispielsweise Polymerisations- oder Kondensationsharze, beispielsweise Aminoplaste, insbesondere Harnstoff- und Melamin-Formaldehydharze, Alkydharze, Acrylharze, Phenoplaste, Polycarbonate und Polyolefine, insbesondere Polystyrol, Polyvinylchlorid, Polyethylen, Polypropylen, Polyacrylnitril, Polyamide, Polyurethane oder Polyester, Acrylourethane oder Polyesterurethane einzeln oder in Mischungen.

Die erwähnten hochmolekularen organischen Stoffe können als plastische Massen, Schmelzen oder in Form von Lacken, Anstrichstoffen oder Druckfarben vorliegen.

Bevorzugt sind Einbrennlacke aus der Klasse der Alkydmelaminharz- oder Acrylmelaminharzlacke sowie wäßrige Polyester-, Polyacrylat- und Polyurethan-Lacke.

Die erfindungsgemäßen Pigmentzubereitungen sind in diesen Anwendungsmedien leicht und bis zu hohen Feinheiten dispergierbar. Diese Dispersionen besitzen eine hohe Flockungssstabilität und zeigen hervorragende rheologische Eigenschaften. Mit ihnen lassen sich Lackierungen von hoher Farbstärke, hohem Glanz und hoher Transparenz mit hervorragenden Echtheitseigenschaften herstellen. Zur Beurteilung der Eigenschaften der beanspruchten Pigmentzubereitungen in Lacksystemen wurden aus der Vielzahl der bekannten Systeme ein Alkyd-Melaminharzlack (AM) auf Basis a) eines mittelöligen, nichttrocknenden Alkydharzes (auf der Basis von synthetischen Fettsäuren und Phthalsäureanhydrid) und b) eines butanolveretherten Melaminharzes mit c) Anteilen eines nichttrocknenden Alkydharzes auf Basis von dehydratisierter Ricinusölsäure (kurzölig) sowie ein Lack auf Basis einer wäßrigen Polyurethandispersion (PUR) ausgewählt. In den nachfolgenden Beispielen wird darauf unter der Bezeichnung "AM" bzw. "PUR" verwiesen.

Die Rheologie des Mahlguts nach der Dispergierung (Millbase-Rheologie) wird gemäß der nachstehenden fünfstufigen Skala bewertet:
- 5: dünnflüssig
- 4: flüssig
- 3: dickflüssig
- 2: leicht gestockt
- 1: gestockt.

Nach dem Verdünnen des Mahlguts auf die Pigmentendkonzentration kann die Viskosität mit dem Viskospatel nach Rossmann, Typ 301, der Firma Erichsen, Iserlohn, beurteilt werden. Vor der Lackierung wurde die gewünschte Viskosität so eingestellt, daß sie einer bestimmten Auslaufzeit im Fordbecher (Düse 4 mm Durchmesser), angegeben in Sekunden (s), entsprach.

Glanzmessungen erfolgten unter einem Winkel von 20°C nach DIN 67530 (ASTMD 523) mit einem "multigloss"-Glanzmeßgerät der Firma Byk-Mallinckrodt, Wesel.

In den folgenden Beispielen bedeuten Teile Gewichtsteile und Prozentangaben Gewichtsprozent. Die Zahl n der an den Pigmentrest gebundenen Lactamreste wurde jeweils durch das Verhältnis der Integrale der Protonen im Lactamring und der Protonen im Pigmentrest in einem ¹H-NMR-Spektrum ermittelt.

In den Tabellen bedeutet "VT 3 % P" jeweils "Vollton 3 % Pigment" und "1:10 TiO₂" steht für "1 Teil Pigment auf 10 Teile Titandioxid Weißpigment". "VE-Wasser" bedeutet "vollentsalztes Wasser".

### Beispiele

1) In 560 Teile Polyphosphorsäure (84 % P₂O₅) wurden bei 110°C 28,0 Teile 2,5-Diphenylaminoterephthalsäure eingetragen und 30 Minuten verrührt. Dann wurden in 15 Minuten 34,4 Teile N-Hydroxymethylcaprolactam portionsweise eingetragen und 3 Stunden bei 110 - 115°C nachgerührt. Anschließend wurde die Mischung zu 1200 Teilen Eiswasser gegeben, dabei hydrolysiert, dann abgesaugt und neutral gewaschen. Man erhielt 188,7 Teile des Pigmentadditivs der Formel (IV) (siehe Formelblatt) in Form eines 22,8 %igen feuchten Preßkuchens.
179,0 Teile eines feuchten Rohchinacridons (24,5 %ig), das durch Ringschluß von 2,5-Di-(4-methylphenylamino)-terephthalsäure in Polyphosphorsäure, Hydrolyse mittels Eiswasser und Filtration erhalten wurde, wurden in 270 Teilen Isobutanol suspendiert und nach Zusatz von 2,5 Teilen Natriumhydroxid 3 Stunden in einem Autoklaven bei einer Temperatur von 125°C und einem Druck von etwa 3 bar gefinisht. Anschließend wurde das Isobutanol mit Wasserdampf abdestilliert. Nach Abkühlen auf 50°C gab man 10,1 Teile des 22,8 %igen wäßrigen Preßkuchens des oben beschriebenen Pigmentadditivs der Formel (IV) zu und rührte 2 Stunden nach. Nach Filtration, Neutralwaschen und Trocknen bei 80°C erhielt man 45,0 Teile einer Zubereitung von C.I. Pigment Red 122.
Ein handelsüblicher AM-Lack wurde mit der oben beschriebenen Pigmentzubereitung auf einen Pigmentgehalt von 12 % pigmentiert. Nach einer Dispergierung von 45 Minuten mit Glasperlen von 3 mm Durchmesser wurde die Rheologie mit 5 bewertet, während ein entsprechend hergestelltes Mahlgut mit dem unpräparierten Pigment eine Rheologie der Note 1 zeigte. Der nach Verdünnung ("Auflacken") mit weiterem AM-Lack zu 4 % pigmentierte Volltonlack besaß eine Viskosität von 3,4 s im Vergleich zu 4,5 s beim unpräparierten Pigment. Der Volltonlack wurde durch Zugabe eines n-Butanol/Xylol-Gemisches (1:1) auf eine Viskosität eingestellt, die einer Auslaufzeit im Fordbecher (Düse 4 mm Durchmesser) von 22 s entsprach. Dann wurde der Lack auf eine Folie gegossen und nach dem Ablüften 30 Minuten bei 140°C eingebrannt. Der Glanzwert betrug 86 im Vergleich zu 58 beim unpräparierten Pigment.
2) In 280 Teile Polyphosphorsäure (84 % P₂O₅) wurden bei 110°C 14,0 Teile 2,5-Diphenylaminoterephthalsäure eingetragen und 1 Stunde verrührt. Dann wurden in 20 Minuten portionsweise 12,4 Teile N- Hydroxymethylvalerolactam eingetragen. Man rührte noch 3,5 Stunden bei 110°C nach und hydrolysierte dann durch Zusammengeben mit 600 Teilen Eiswasser. Nach Absaugen und Neutralwaschen erhielt man 106 Teile einer Verbindung der Formel (V) (siehe Formelblatt) in Form eines 19,0 %igen feuchten Preßkuchens.
179,0 Teile eines feuchten Rohchinacridons (26,4 %ig), das durch Ringschluß von 2,5-Di-(4-methylphenylamino)-terephthalsäure in Polyphosphorsäure, Hydrolyse mittels Eiswasser und Filtration erhalten wurde, wurden in 270 Teilen Isobutanol, 50 Teilen vollentsalztem Wasser und 2,5 Teilen Natriumhydroxid über Nacht suspendiert. Man gab 23,2 Teile des 19,0 %igen wäßrigen Preßkuchens des Pigmentadditivs der Formel (V) hinzu und rührte 3 Stunden bei 125°C in einem Autoklaven. Anschließend wurde das Isobutanol mit Wasserdampf abdestilliert. Der Destillationsrückstand wurde filtriert, neutral gewaschen und bei 80°C getrocknet. Man erhielt 43,4 Teile einer Zubereitung von C.I. Pigment Red 122.
a) Bei der Prüfung, wie in Beispiel 1 beschrieben, erhielt man im AM-Lack transparentere und farbstärkere Lackierungen als bei Verwendung des unpräparierten Pigments.

| | Beispiel 2 | Vergleich |
|---|---|---|
| Rheologie | 5 | 1 - 2 |
| Glanz | 95 | 47 |

b) 12,0 Teile der Pigmentzubereitung von C.I. Pigment Red 122, 47,5 Teile eines 25 %igen wäßrigen Polyurethanharzes und 0,5 Teile eines handelsüblichen Entschäumers wurden nach Zugabe von 90 Teilen Glasperlen (Durchmesser 1 mm) 60 Minuten auf einer Laborperlmühle bei 40°C dispergiert. Man erhielt eine 20 %ige Pigmentpaste, die mit weiterem wäßrigen PUR-Harz auf eine Pigmentkonzentration von 3 % aufgelackt wurde. Man erhielt damit im Vergleich zu einem unpräparierten Pigment einen wesentlich transparenteren und farbstärkeren Überzug bei höherem Glanz und gleicher Rheologie.

| | Rheologie | VT 3 % P | 1:10 TiO₂ | Glanz |
|---|---|---|---|---|
| Vergleich | 3 - 4 | - | - | 64 |
| Beispiel 2 | 3 | wesentlich transparenter | deutlich farbstärker | 79 |

Auch gegenüber einem Pigment, das mit einem basischen Pigmentderivat wie in der US-PS 4 310 359, Beispiel 1, belegt ist, besitzt dieses Pigment überlegene coloristische Eigenschaften.

| | VT 3 % P | 1:10 TiO₂ | Glanz |
|---|---|---|---|
| Pigment mit Additiv gemäß US-PS 4 310 359, | | | |
| Beispiel 1 | - | - | 6 |
| Beispiel 2 | etwas transparenter | deutlich farbstärker | 79 |

3) 500 Teile einer 7,3 %igen wäßrig-isobutanolischen Suspension von rohem C.I. Pigment Violet 19 wurden nach Zugabe von 18,4 Teilen eines 19,6 %igen wäßrigen Preßkuchens des Pigmentderivats aus Beispiel 1 fünf Stunden in einem Autoklaven bei 145°C und einem Druck von 3 bis 6 bar gefinisht. Anschließend wurde das Isobutanol mit Wasserdampf abdestilliert. Nach 30 Minuten Nachrühren wurde mit 10 %iger Natronlauge auf pH 8 bis 9 eingestellt und dann die Pigmentzubereitung durch Filtration isoliert. Nach Neutralwaschen und Trocknen bei 80°C erhielt man 38,9 Teile einer Pigmentzubereitung von C.I. Pigment Violet 19.
Bei der Prüfung einer 5 %igen Pigmentierung im AM-Lack erhielt man einen wesentlich transparenteren und in der Weißaufhellung wesentlich farbstärkeren Überzug als mit einem unpräparierten Vergleich.

| | Rheologie | VT 5 % P | 1:10 TiO₂ | Glanz |
|---|---|---|---|---|
| Vergleich | 4 - 5 | - | - | 53 |
| Beispiel 3 | 5 | wesentlich transparenter | merklich farbstärker | 80 |

4) In 280 Teile Polyphosphorsäure (84 % P₂O₅) wurden bei 105°C 14,0 Teile 2,5-Diphenylaminoterephthalsäure eingetragen und 1 Stunde bei 105°C verrührt. Dann wurden 13,9 Teile N-Hydroxymethylpyrrolidon in 15 Minuten portionsweise eingetragen. Es wurde noch 3 Stunden bei 110°C nachgerührt und anschließend durch Zusammengeben mit 600 Teilen Eiswasser hydrolysiert. Nach Absaugen, Neutralwaschen und Trocknen bei 80°C erhielt man 21,3 Teile einer Verbindung der Formel (VI) (siehe Formelblatt). 20,0 Teile trockenes 2,9-Dimethylchinacridon (C.I. Pigment Red 122) und 1,0 Teile des Pigmentadditivs der Formel (VI) wurden auf einer Labormühle homogen miteinander vermahlen. Bei der Prüfung, wie in Beispiel 1 beschrieben, zeigte diese Pigmentzubereitung im AM-Lack besseres rheologisches und coloristisches Verhalten als das unpräparierte Vergleichspigment.

| | Beispiel 4 | Vergleich |
|---|---|---|
| Rheologie | 5 | 1 - 2 |
| Viskosität | 2,9 s | 4,6 s |
| Glanz | 79 | 59 |

5) 18,0 Teile C.I. Pigment Violet 23 wurden in 360 Teile Polyphosphorsäure (84 % P₂O₅) bei 80°C portionsweise eingetragen und 15 Minuten verrührt. Dann wurden langsam 10,4 Teile N-Hydroxymethylpyrrolidon eingetragen. Man rührte 3,5 Stunden bei 105 - 110°C nach, hydrolysierte durch Zusammengeben mit 700 Teilen Eiswasser und stellte mit konzentrierter Natronlauge auf pH 9 bis 10. Nach Stehenlassen über Nacht wurde der Niederschlag abfiltriert und mit Wasser neutral und salzfrei gewaschen. Man erhielt 139,9 Teile eines 16,3 %igen feuchten Filterkuchens einer Verbindung der Formel (VII) (siehe Formelblatt).
75,0 Teile eines 40 %igen wäßrigen Preßkuchens von rohem C.I. Pigment Violet 23 (salzfrei) wurden in einem Gemisch aus 96,0 Teilen Isobutanol, 196,0 Teilen VE-Wasser und 2,7 Teilen konzentrierter Ameisensäure 15 Minuten angeteigt.
Anschließend erhitzte man 1 Stunde zum Rückfluß, gab dann 18,4 Teile des 16,3 %igen feuchten Preßkuchens der Verbindung der Formel (VII) hinzu, rührte noch 30 Minuten nach und destillierte das Isobutanol mit Wasserdampf ab. Die Pigmentzubereitung wurde durch Filtration isoliert, neutral gewaschen und bei 80°C getrocknet. Man erhielt 32,3 Teile einer Pigmentzubereitung von C.I. Pigment Violet 23.
Ein handelsüblicher AM-Lack wurde mit der vorgenannten Pigmentzubereitung auf einen Gehalt von 10 % pigmentiert. Nach einer Dispergierung von 45 Minuten mit Glasperlen von 3 mm Durchmesser wurde die Rheologie mit 5 bewertet, während ein entsprechend hergestelltes Mahlgut mit einem nach der US-PS 4 253 839, Beispiel 2, hergestellten Pigment eine Rheologie der Note 1 zeigte.
Der nach Auflacken mit weiterem AM-Lack auf einen Pigmentgehalt von 3 % pigmentierte Volltonlack besaß eine Viskosität von 3,3 s im Gegensatz zu 10,2 s des Vergleichspigments. Der Volltonlack wurde durch Zugabe eines n-Butanol/Xylol-Gemisches (1:1) auf eine Viskosität eingestellt, die einer Auslaufzeit im Fordbecher (Düse 4 mm Durchmesser) von 22 s entsprach. Der Lack wurde auf eine Folie gegossen und nach 20-minütigem Ablüften bei 140°C eingebrannt. Der Glanzwert betrug 70 (Vergleichspigment 19).
6) In 350 Teile Polyphosphorsäure (84 % P₂O₅) wurden bei 80 - 85°C 18,0 Teile rohes C.I. Pigment Violet 23 (salzfrei) eingetragen. Nach einer Nachrührzeit von 30 Minuten wurden innerhalb von 20 Minuten 8,8 Teile N-Hydroxymethylcaprolactam eingetragen. Es wurde 1,5 Stunden bei 105°C nachgerührt und anschließend auf 700 Teile Eiswasser ausgetragen, filtriert und neutral gewaschen. Man erhielt 81,2 Teile eines 25,7 %igen wäßrigen Preßkuchens eines Pigmentderivates der Formel (VIII) (siehe Formelblatt).
75,0 Teile eines 40 %igen wäßrigen Preßkuchens von rohem C.I. Pigment Violet 23 (salzfrei) wurden in einem Gemisch von 96,0 Teilen Isobutanol, 170,0 Teilen VE-Wasser und 2,7 Teilen konzentrierter Ameisensäure 15 Minuten angerührt. Dann gab man 11,7 Teile des 25,7 %igen wäßrigen Preßkuchens der Verbindung der Formel (VIII) zu, rührte 15 Minuten nach und erhitzte 1 Stunde zum Rückfluß. Anschließend destillierte man das Isobutanol mit Wasserdampf ab, ließ auf 40°C abkühlen und stellte mit konzentrierter Natronlauge auf pH 8 bis 9. Nach Absaugen, Neutralwaschen und Trocknen bei 80°C erhielt man 31,8 Teile einer Pigmentzubereitung von C.I. Pigment Violet 23. Die erhaltene Pigmentzubereitung besaß gegenüber dem Vergleichspigment aus US-PS 4 253 839, Beispiel 2, eine wesentlich bessere Rheologie im AM-Lack und eine geringere Viskosität.

| | Beispiel 6 | Vergleich |
|---|---|---|
| Rheologie | 5 | 1 - 2 |
| Viskosität | 3,3 s | 8,3 s |

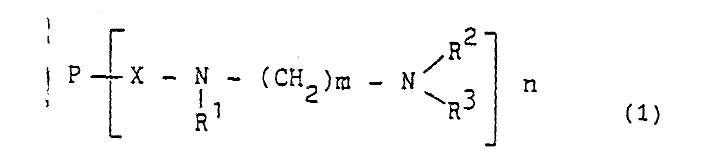

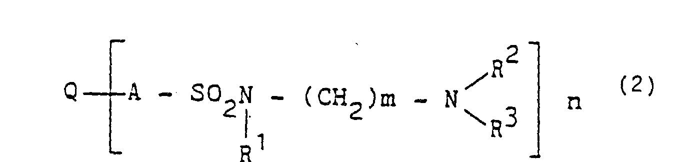

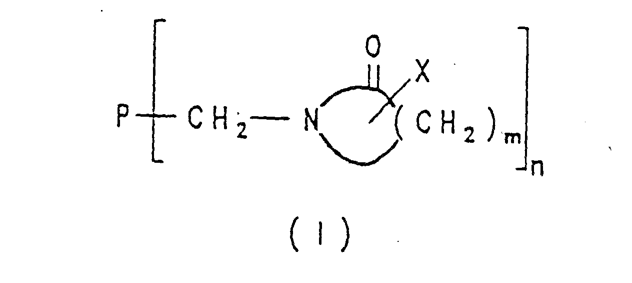

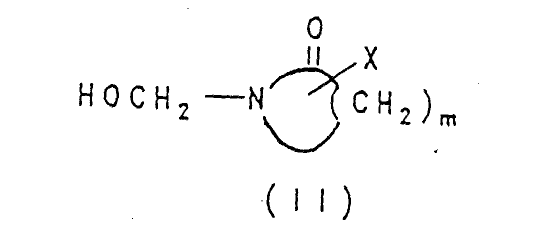

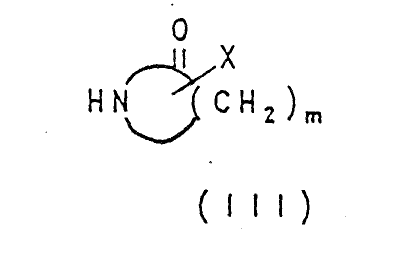

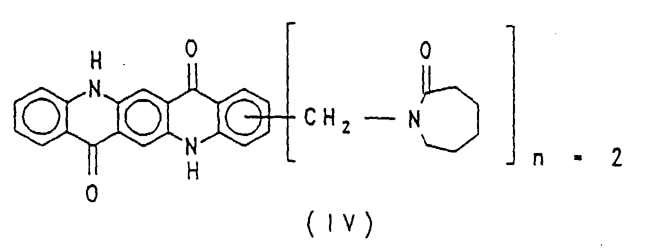

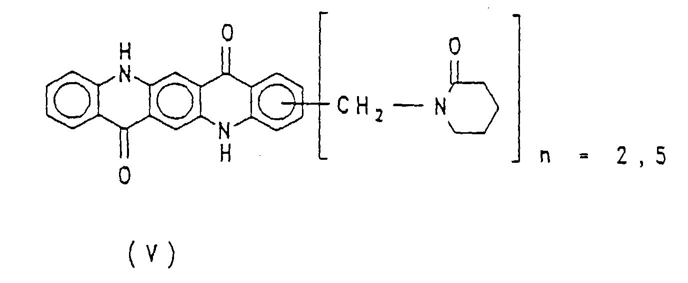

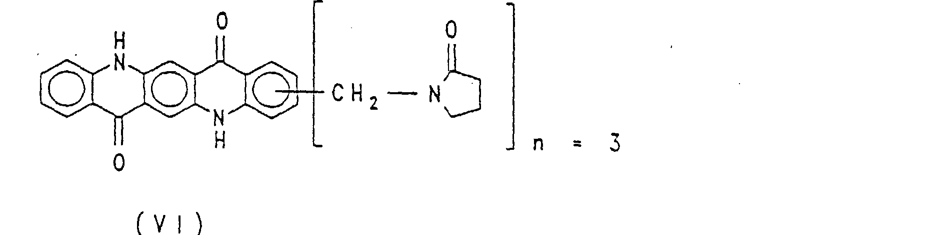

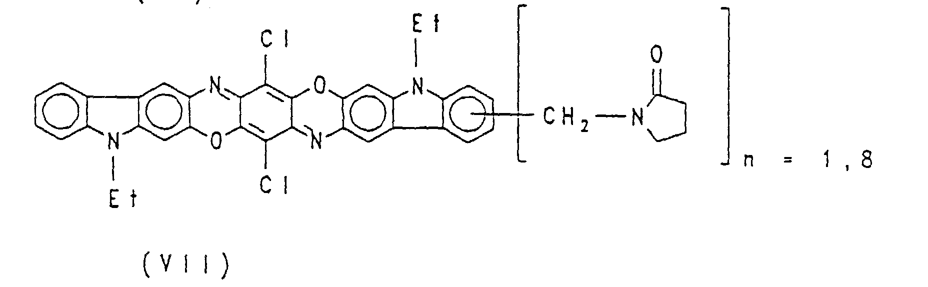

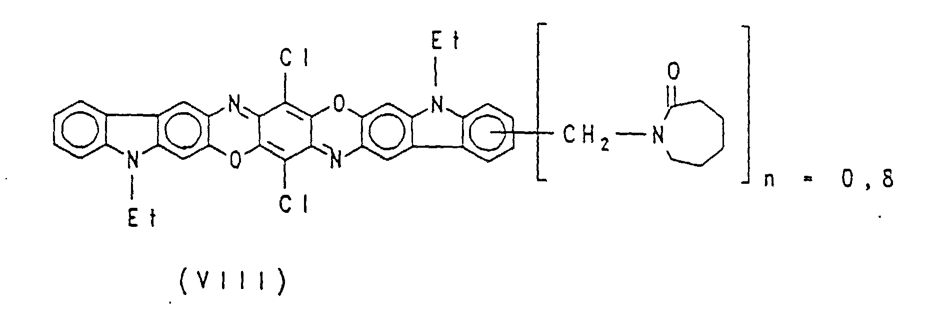

## Patentansprüche (Patentansprüche für folgende(n) Vertragsstaat(en): CH, DE, FR, GB, IT, LI)

1. Pigmentzubereitungen, deren Pigmentanteil im wesentlichen aus organischen Pigmenten aus der Klasse der Azopigmente, der Anthrachinon-, Anthanthron-, Flavanthron-, Chinacridon-, Chinophthalon-, Dioxazin-, Isoindolin-, Isoindolinon-, Perinon-, Perylen- und/oder Thioindigo-Pigmente und Pigmentadditiven der allgemeinen Formel (I) besteht, 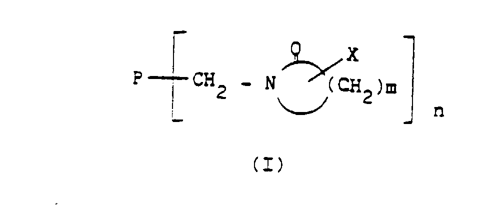 in welcher P für einen Rest eines organischen Pigments aus den oben genannten Klassen steht, m eine ganze Zahl von 3 bis 20 ist, n einen Wert von 0,1 bis 4 annehmen kann und X in den Methylengruppen des Lactamrings Wasserstoff, C₁-C₄-Alkyl, Phenyl, Hydroxyl, NR¹R², wobei R¹ und R² unabhängig voneinander Wasserstoff oder C₁-C₄-Alkyl darstellen, oder COOM bedeutet, wobei M für Wasserstoff oder für die stöchiometrische Menge eines ein- bis dreiwertigen Kations steht.

2. Pigmentzubereitungen gemäß Anspruch 1, dadurch gekennzeichnet, daß P den Rest eines polycyclischen Pigments aus der Klasse Anthrachinon, Anthanthron, Chinacridon, Chinophthalon, Dioxazin, Isoindolin, Isoindolinon, Perinon, Perylen und/oder Thioindigo darstellt, X vorzugsweise für Wasserstoff oder NR¹R² steht, wobei R¹ und R² unabhängig voneinander Wasserstoff oder C₁-C₄-Alkyl bedeuten, m vorzugsweise für eine ganze Zahl von 3 bis 6 steht und n vorzugsweise einen Wert von 1 bis 3 annehmen kann.

3. Pigmentzubereitungen nach Anspruch 2, dadurch gekennzeichnet, daß X Wasserstoff bedeutet, m für eine ganze Zahl von 3 bis 5 steht und n einen Wert von 1,5 bis 3 annimmt.

4. Pigmentzubereitungen nach mindestens einem der Ansprüche 1 bis 3, dadurch gekennzeichnet, daß die darin enthaltenen Pigmente Chinacridon- und/oder Dioxazinpigmente sind.

5. Pigmentzubereitungen nach mindestens einem der Ansprüche 1 bis 4, dadurch gekennzeichnet, daß die darin enthaltenen Pigmente als reine Pigmente oder als Mischkristalle aus mindestens zwei Pigmenten vorliegen.

6. Pigmentzubereitungen nach mindestens einem der Ansprüche 1 bis 5, dadurch gekennzeichnet, daß die Pigmentzubereitungen aus
a) 99,5 bis 75, vorzugsweise 95 bis 85, Gewichtsteilen mindestens eines organischen Pigments,
b) 0,5 bis 25, vorzugsweise 5 bis 15, Gewichtsteilen mindestens eines Pigmentadditivs der Formel (I) und
c) 0 bis 10, vorzugsweise 0 bis 5, Gewichtsteilen an weiteren üblichen Zusatzstoffen bestehen.

7. Pigmentzubereitungen nach mindestens einem der Ansprüche 1 bis 6, dadurch gekennzeichnet, daß die Pigmentzubereitungen Chinacridon-Additive enthalten.

8. Pigmentadditive der Formel (I), wie sie im Anspruch 1, 2 oder 3 definiert sind.

9. Verwendung der Pigmentzubereitungen nach mindestens einem der Ansprüche 1 bis 7 zum Pigmentieren hochmolekularer organischer Materialien, insbesondere von lösemittelhaltigen und/oder wäßrigen Lacksystemen.

10. Ausführungsform nach Anspruch 9, dadurch gekennzeichnet, daß die Lacksysteme Einbrennlacke, vorzugsweise aus der Klasse der Alkydmelaminharz- oder Acrylmelaminharzlacke, Polyester-, Polyacrylat-, Polyurethan-, Acrylourethan- und/oder Polyesterurethansysteme auf wäßriger und lösemittelhaltiger Basis sind.

## Patentansprüche (Patentansprüche für folgende(n) Vertragsstaat(en): ES)

1. Pigmentzubereitung, deren Pigmentanteil im wesentlichen aus organischen Pigmenten aus der Klasse der Azopigmente, der Anthrachinon-, Anthanthron-, Flavanthron-, Chinacridon-, Chinophthalon-, Dioxazin-, Isoindolin-, Isoindolinon-, Perinon-, Perylen- und/oder Thioindigo-Pigmente und Pigmentadditiven der allgemeinen Formel (I) besteht, 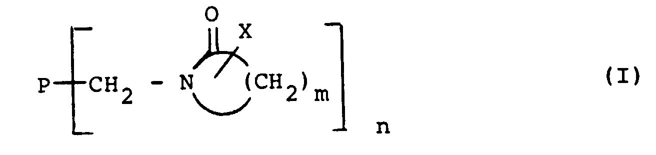 in welcher P für einen Rest eines organischen Pigments aus den oben genannten Klassen steht, m eine ganze Zahl von 3 bis 20 ist, n einen Wert von 0,1 bis 4 annehmen kann und X in den Methylengruppen des Lactamrings Wasserstoff, C₁-C₄-Alkyl, Phenyl, Hydroxyl, NR¹R², wobei R¹ und R² unabhängig voneinander Wasserstoff oder C₁-C₄-Alkyl darstellen, oder COOM bedeutet, wobei M für Wasserstoff oder für die stöchiometrische Menge eines ein- bis dreiwertigen Kations steht.

2. Pigmentzubereitung gemäß Anspruch 1, dadurch gekennzeichnet, daß P den Rest eines polycyclischen Pigments aus der Klasse Anthrachinon, Anthanthron, Chinacridon, Chinophthalon, Dioxazin, Isoindolin, Isoindolinon, Perinon, Perylen und/oder Thioindigo darstellt, X vorzugsweise für Wasserstoff oder NR¹R² steht, wobei R¹ und R² unabhängig voneinander Wasserstoff oder C₁-C₄-Alkyl bedeuten, m vorzugsweise für eine ganze Zahl von 3 bis 6 steht und n vorzugsweise einen Wert von 1 bis 3 annehmen kann.

3. Pigmentzubereitung nach Anspruch 2, dadurch gekennzeichnet, daß X Wasserstoff bedeutet, m für eine ganze Zahl von 3 bis 5 steht und n einen Wert von 1,5 bis 3 annimmt.

4. Pigmentzubereitung nach mindestens einem der Ansprüche 1 bis 3, dadurch gekennzeichnet, daß die darin enthaltenen Pigmente Chinacridon- und/oder Dioxazinpigmente sind.

5. Pigmentzubereitung nach mindestens einem der Ansprüche 1 bis 4, dadurch gekennzeichnet, daß die darin enthaltenen Pigmente als reine Pigmente oder als Mischkristalle aus mindestens zwei Pigmenten vorliegen.

6. Pigmentzubereitung nach mindestens einem der Ansprüche 1 bis 5, dadurch gekennzeichnet, daß die Pigmentzubereitung aus
a) 99,5 bis 75, vorzugsweise 95 bis 85, Gewichtsteilen mindestens eines organischen Pigments,
b) 0,5 bis 25, vorzugsweise 5 bis 15, Gewichtsteilen mindestens eines Pigmentadditivs der Formel (I) und
c) 0 bis 10, vorzugsweise 0 bis 5, Gewichtsteilen an weiteren üblichen Zusatzstoffen bestehen.

7. Pigmentzubereitung nach mindestens einem der Ansprüche 1 bis 6, dadurch gekennzeichnet, daß die Pigmentzubereitung Chinacridon-Additive enthält.

8. Verfahren zur Herstellung eines Pigmentadditivs der Formel (I), wie sie in Anspruch 1, 2 oder 3 definiert ist, dadurch gekennzeichnet, daß ein Lactam der Formel (III) 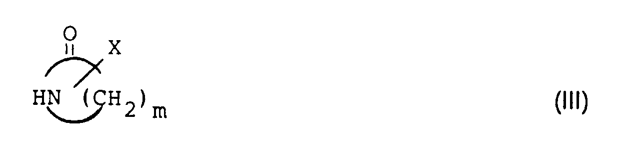 in Gegenwart einer Formaldehyd abgebenden Substanz oder daß ein N-Hydroxymethyllactam der Formel (II) 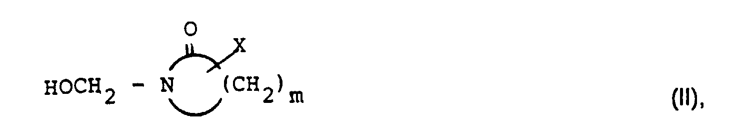 worin X und m die in Formel (I) angegebenen Bedeutungen haben, im sauren Reaktionsmedium mit einem der in Anspruch 1 genannten Pigmente umgesetzt wird.

9. Verfahren zum Pigmentieren hochmolekularer organischer Materialien, insbesondere von lösemittelhaltigen und/oder wäßrigen Lacksystemen mit einer Pigmentzubereitung nach mindestens einem der Ansprüche 1 bis 7.

10. Ausführungsform nach Anspruch 9, dadurch gekennzeichnet, daß die Lacksysteme Einbrennlacke, vorzugsweise aus der Klasse der Alkydmelaminharz- oder Acrylmelaminharzlacke, Polyester-, Polyacrylat-, Polurethan-, Acrylourethan- und/oder Polyesterurethansysteme auf wäßriger und lösemittelhaltiger Basis sind.

## Claims (Claims for the following Contracting State(s): CH, DE, FR, GB, IT, LI)

1. A pigment preparation whose pigment portion is composed essentially of organic pigments selected from the class of azo pigments, anthraquinone, anthanthrone, flavanthrone, quinacridone, quinophthalone, dioxazine, isoindoline, isoindolinone, perinone, perylene and/or thioindigo pigments, and of pigment additives of the formula (I), 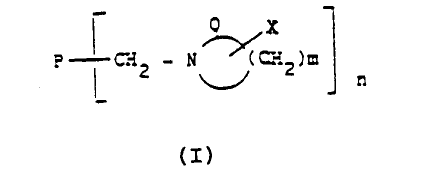 in which P is a radical of an organic pigment from the abovementioned classes, m is an integer from 3 to 20, n can have a value from 0.1 to 4 and X in the methylene groups of the lactam ring is hydrogen, C₁-C₄-alkyl, phenyl, hydroxyl, NR¹R², R¹ and R² independently of one another being hydrogen or C₁-C₄-alkyl, or COOM, M being hydrogen or the stoichiometric amount of a mono- to trivalent cation.

2. A pigment preparation as claimed in claim 1, wherein P is the radical of a polycyclic pigment selected from the class anthraquinone, anthanthrone, quinacridone, quinophthalone, dioxazine, isoindoline, isoindolinone, perinone, perylene and/or thioindigo, X is preferably hydrogen or NR¹R², R¹ and R² independently of one another being hydrogen or C₁-C₄-alkyl, m is preferably an integer from 3 to 6 and n can preferably have a value from 1 to 3.

3. A pigment preparation as claimed in claim 2, wherein X is hydrogen, m is an integer from 3 to 5 and n has a value from 1.5 to 3.

4. A pigment preparation as claimed in at least one of claims 1 to 3, wherein the pigments contained therein are quinacridone and/or dioxazine pigments.

5. A pigment preparation as claimed in at least one of claims 1 to 4, wherein the pigments contained therein are present as pure pigments or as mixed crystals from at least two pigments.

6. A pigment preparation as claimed in at least one of claims 1 to 5, wherein the pigment preparation is composed of
a) 99.5 to 75, preferably 95 to 85, parts by weight of at least one organic pigment,
b) 0.5 to 25, preferably S to 15, parts by weight of at least one pigment additive of the formula (I) and
c) 0 to 10, preferably 0 to 5, parts by weight of other conventional additives.

7. A pigment preparation as claimed in at least one of claims 1 to 6, wherein the pigment preparation contains quinacridone additives.

8. A pigment additive of the formula (I), as defined in claim 1, 2 or 3.

9. Use of the pigment preparation as claimed in at least one of claims 1 to 7 for pigmenting high-molecular-weight organic materials, in particular solvent-borne and/or aqueous paint systems.

10. An embodiment as claimed in claim 9, wherein the paint systems are baking paints based on aqueous or solvent-borne paints preferably selected from the class of alkyd melamine resin paints or acrylic melamine resin paints, polyester, polyacrylate, polyurethane, acrylourethane and/or polyester urethane systems.

## Claims (Claims for the following Contracting State(s): ES)

1. A pigment preparation whose pigment portion is composed essentially of organic pigments selected from the class of azo pigments, anthraquinone, anthanthrone, flavanthrone, quinacridone, quinophthalone, dioxazine, isoindoline, isoindolinone, perinone, perylene and/or thioindigo pigments, and of pigment additives of the formula (I), 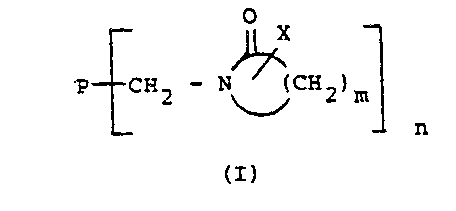 in which P is a radical of an organic pigment from the abovementioned classes, m is an integer from 3 to 20, n can have a value from 0.1 to 4 and X in the methylene groups of the lactam ring is hydrogen, C₁-C₄-alkyl, phenyl, hydroxyl, NR¹R², R¹ and R² independently of one another being hydrogen or C₁-C₄-alkyl, or COOM, M being hydrogen or the stoichiometric amount of a mono- to trivalent cation.

2. A pigment preparation as claimed in claim 1, wherein P is the radical of a polycyclic pigment selected from the class anthraquinone, anthanthrone, quinacridone, quinophthalone, dioxazine, isoindoline, isoindolinone, perinone, perylene and/or thioindigo, X is preferably hydrogen or NR¹R², R¹ and R² independently of one another being hydrogen or C₁-C₄-alkyl, m is preferably an integer from 3 to 6 and n can preferably have a value from 1 to 3.

3. A pigment preparation as claimed in claim 2, wherein X is hydrogen, m is an integer from 3 to 5 and n has a value from 1.5 to 3.

4. A pigment preparation as claimed in at least one of claims 1 to 3, wherein the pigments contained therein are quinacridone and/or dioxazine pigments.

5. A pigment preparation as claimed in at least one of claims 1 to 4, wherein the pigments contained therein are present as pure pigments or as mixed crystals from at least two pigments.

6. A pigment preparation as claimed in at least one of claims 1 to 5, wherein the pigment preparation is composed of
a) 99.5 to 75, preferably 95 to 85, parts by weight of at least one organic pigment,
b) 0.5 to 25, preferably 5 to 15, parts by weight of at least one pigment additive of the formula (I) and
c) 0 to 10, preferably 0 to 5, parts by weight of other conventional additives.

7. A pigment preparation as claimed in at least one of claims 1 to 6, wherein the pigment preparation contains quinacridone additives.

8. A process for the preparation of a pigment additive of the formula (I) as defined in claim 1, 2 or 3, which comprises reacting a lactam of the formula (III) 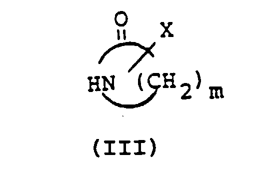 in the presence of a formaldehyde-releasing substance, or an N-hydroxymethyllactam of the formula II 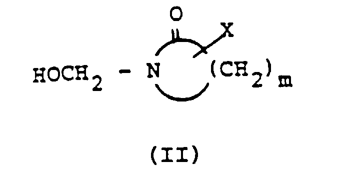 in which X and m are as defined in the formula (I), in an acidic reaction medium with one of the pigments mentioned in claim 1.

9. A process for pigmenting high-molecular-weight organic materials, in particular solvent-borne and/or aqueous paint systems using a pigment preparation as claimed in at least one of claims 1 to 7.

10. An embodiment as claimed in claim 9, wherein the paint systems are baking paints based on aqueous or solvent-borne paints preferably selected from the class of alkyd melamine resin paints or acrylic melamine resin paints, polyester, polyacrylate, polyurethane, acrylourethane and/or polyester urethane systems.

## Revendications (Revendications pour l'(les) Etat(s) contractant(s) suivant(s): CH, DE, FR, GB, IT, LI)

1. Compositions de pigments dont la fraction pigmentaire est constituée essentiellement de pigments organiques de la classe des pigments azoïques, de pigments de type anthraquinone, anthanthrone, flavanthrone, quinacridone, quinophtalone, dioxazine, isoindoline, isoindolinone, périnone, pérylène et/ou de pigments de type thio-indigo, et d'additifs de pigments de formule générale I 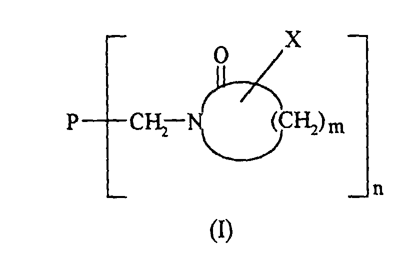 dans laquelle P représente le reste d'un pigment organique des classes précitées, m est un nombre entier de 3 à 20, n peut prendre une valeur comprise entre 0,1 et 4, et X, dans les groupes méthylène du noyau lactame, représente un atome d'hydrogène ou un groupe alkyle en C₁-C₄, phényle, hydroxyle, NR¹R², R¹ et R² étant indépendamment l'un de l'autre un atome d'hydrogène ou un groupe alkyle en C₁-C₄, ou COOM, M étant un atome d'hydrogène ou représentant la quantité stoechiométrique d'un cation monovalent, divalent ou trivalent.

2. Compositions de pigments selon la revendication 1, caractérisées en ce que P est le reste d'un pigment polycyclique de la classe des anthraquinones, des anthanthrones, des quinacridones, des quinophtalones, des dioxazines, des isoindolines, des isoindolinones, des périnones, des pérylènes et/ou du thio-indigo, X est de préférence un atome d'hydrogène ou un groupe NR¹R² où R¹ et R² sont indépendamment l'un de l'autre un atome d'hydrogène ou un groupe alkyle en C₁-C₄, m est de préférence un nombre entier de 3 à 6 et n peut prendre de préférence une valeur comprise entre 1 et 3.

3. Compositions de pigments selon la revendication 2, caractérisées en ce que X est un atome d'hydrogène, m est un nombre entier de 3 à 5 et n prend une valeur comprise entre 1,5 et 3.

4. Compositions de pigments selon l'une au moins des revendications 1 à 3, caractérisées en ce que les pigments qui y sont contenus sont des pigments de type quinacridone et/ou dioxazine.

5. Compositions de pigments selon l'une au moins des revendications 1 à 4, caractérisées en ce que les pigments qui y sont contenus se trouvent sous forme de pigments purs ou sous forme de cristaux mixtes d'au moins deux pigments.

6. Compositions de pigments selon l'une au moins des revendications 1 à 5, caractérisées en ce que les compositions de pigments sont constituées de
a) 99,5 à 75, de préférence 95 à 85 parties en masse d'au moins un pigment organique,
b) 0,5 à 25, de préférence 5 à 15 parties en masse d'au moins un additif de pigment de formule (I) et
c) 0 à 10, de préférence 0 à 5 parties en masse d'autres additifs courants.

7. Compositions de pigments selon l'une au moins des revendications 1 à 6, caractérisées en ce que les compositions de pigments contiennent des additifs de type quinacridone.

8. Additifs de pigments de formule (I) tels qu'ils sont définis dans la revendication 1, 2 ou 3.

9. Utilisation des compositions de pigments selon l'une au moins des revendications 1 à 7 pour la pigmentation de matières organiques macromoléculaires, en particulier de systèmes de vernis contenant des solvants et/ou de systèmes de vernis aqueux.

10. Forme de réalisation selon la revendication 9, caractérisée en ce que les systèmes de vernis sont des vernis à cuire, de préférence de la classe des vernis à résine alkyde-mélamine ou à résine acrylique-mélamine, des systèmes de polyesters, de polyacrylates, de polyuréthanes, d'acrylo-uréthanes et/ou de polyesteruréthanes, ayant une base aqueuse ou une base contenant des solvants.

## Revendications (Revendications pour l'(les) Etat(s) contractant(s) suivant(s): ES)

1. Composition de pigments dont la fraction pigmentaire est constituée essentiellement de pigments organiques de la classe des pigments azoïques, de pigments de type anthraquinone, anthanthrone, flavanthrone, quinacridone, quinophtalone, dioxazine, isoindoline, isoindolinone, périnone, pérylène et/ou de pigments de type thio-indigo, et d'additifs de pigments de formule générale I 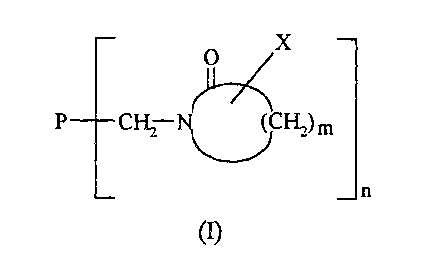 dans laquelle P représente le reste d'un pigment organique des classes précitées, m est un nombre entier de 3 à 20, n peut prendre une valeur comprise entre 0,1 et 4, et X, dans les groupes méthylène du noyau lactame, représente un atome d'hydrogène ou un groupe alkyle en C₁-C₄, phényle, hydroxyle, NR¹R², R¹ et R² étant indépendamment l'un de l'autre un atome d'hydrogène ou un groupe alkyle en C₁-C₄, ou COOM, M étant un atome d'hydrogène ou représentant la quantité stoechiométrique d'un cation monovalent, divalent ou trivalent.

2. Composition de pigments selon la revendication 1, caractérisée en ce que P est le reste d'un pigment polycyclique de la classe des anthraquinones, des anthanthrones, des quinacridones, des quinophtalones, des dioxazines, des isoindolines, des isoindolinones, des périnones, des pérylènes et/ou du thio-indigo, X est de préférence un atome d'hydrogène ou un groupe NR¹R² où R¹ et R² sont indépendamment l'un de l'autre un atome d'hydrogène ou un groupe alkyle en C₁-C₄, m est de préférence un nombre entier de 3 à 6 et n peut prendre de préférence une valeur comprise entre 1 et 3.

3. Composition de pigments selon la revendication 2, caractérisée en ce que X est un atome d'hydrogène, m est un nombre entier de 3 à 5 et n prend une valeur comprise entre 1,5 et 3.

4. Composition de pigments selon l'une au moins des revendications 1 à 3, caractérisée en ce que les pigments qui y sont contenus sont des pigments de type quinacridone et/ou dioxazine.

5. Composition de pigments selon l'une au moins des revendications 1 à 4, caractérisée en ce que les pigments qui y sont contenus se trouvent sous forme de pigments purs ou sous forme de cristaux mixtes d'au moins deux pigments.

6. Composition de pigments selon l'une au moins des revendications 1 à 5, caractérisée en ce que la composition de pigments est constituée de
a) 99,5 à 75, de préférence 95 à 85 parties en masse d'au moins un pigment organique,
b) 0,5 à 25, de préférence 5 à 15 parties en masse d'au moins un additif de pigment de formule (I) et
c) 0 à 10, de préférence 0 à 5 parties en masse d'autres additifs courants.

7. Composition de pigments selon l'une au moins des revendications 1 à 6, caractérisée en ce que la composition de pigments contient des additifs de type quinacridone.

8. Procédé de préparation d'un additif de pigment de formule (I) telle qu'elle est définie dans la revendication 1, 2 ou 3, caractérisé en ce que l'on fait réagir un lactame de formule (III) 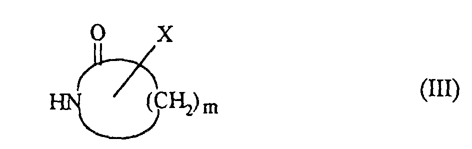 en présence d'une substance donnant un formaldéhyde, ou un hydroxyméthyllactame de formule (II) 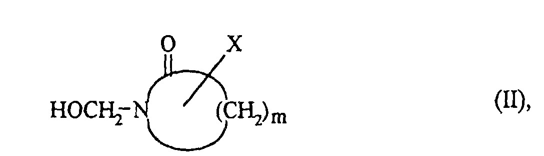 où X et m ont les significations indiquées dans la formule (I), dans un milieu réactionnel acide, avec l'un des pigments cités dans la revendication 1.

9. Procédé de pigmentation de matières organiques macromoléculaires, en particulier de systèmes de vernis contenant des solvants et/ou de systèmes de vernis aqueux, avec une composition de pigments selon l'une quelconque des revendications 1 à 7.

10. Forme de réalisation selon la revendication 9, caractérisée en ce que les systèmes de vernis sont des vernis à cuire, de préférence de la classe des vernis à résine alkyde-mélamine ou à résine acrylique-mélamine, des systèmes de polyesters, de polyacrylates, de polyuréthanes, d'acrylo-uréthanes et/ou de polyesteruréthanes, ayant une base aqueuse ou une base contenant des solvants.
